# FASCICULE DE BREVET EUROPEEN

(11) **EP 4 112 476 B1**
(45) Date de publication et mention de la délivrance du brevet: **18.09.2024**
(21) Numéro de dépôt: 22179538.8
(22) Date de dépôt: 17.06.2022
(51) Int. Cl.: B64D 27/24

(54) **ENSEMBLE PROPULSEUR À HÉLICE ET MOTEUR ÉLECTRIQUE COMPRENANT UNE STRUCTURE PRIMAIRE ADAPTÉE ET AÉRONEF COMPORTANT AU MOINS UN TEL ENSEMBLE PROPULSEUR**
PROPELLER- UND ELEKTROMOTORBAUGRUPPE, DIE EINE ANGEPASSTE PRIMÄRSTRUKTUR UMFASST, UND FLUGZEUG, DAS MINDESTENS EINE SOLCHE BAUGRUPPE UMFASST
PROPELLER AND ELECTRIC MOTOR ASSEMBLY COMPRISING A SUITABLE PRIMARY STRUCTURE AND AIRCRAFT COMPRISING AT LEAST SUCH ASSEMBLY

(30) Priorité: 29.06.2021 FR 2106993
(43) Date de publication de la demande: 04.01.2023
(73) Titulaire: AIRBUS OPERATIONS (S.A.S.), 31060 Toulouse (FR); Airbus SAS, 31700 Blagnac (FR)
(72) Inventeur: POME, Pascal, 31060 TOULOUSE (FR); JOLIVET, Nicolas, 31060 TOULOUSE (FR); AMARGIER, Rémi, 31060 TOULOUSE (FR); CZAPLA, Lionel, 31060 TOULOUSE (FR); ALVAREZ, Franck, 31060 TOULOUSE (FR); FUKASAKU, Kotaro, 31060 TOULOUSE (FR); PENVEN, Benoît, 31060 TOULOUSE (FR); JALBERT, Delphine, 31700 BLAGNAC (FR); LAFONT, Laurent, 31700 BLAGNAC (FR); TASIC, Milan, 31060 TOULOUSE (FR); GOUPIL, Frédéric, 31060 TOULOUSE (FR); LAPEYRE, Jean-Victor, 13700 MARIGNANE (FR); MERMOZ, Emmanuel, 13700 MARIGNANE (FR)
(74) Mandataire: Fantin, Laurent

(56) Documents cités:
- EP-A1- 1 571 081
- EP-A1- 3 757 012
- FR-A1- 2 916 736

## Description

La présente demande se rapporte à un ensemble propulseur à hélice et moteur électrique comprenant une structure primaire adaptée ainsi qu'à un aéronef comportant au moins un tel ensemble propulseur.

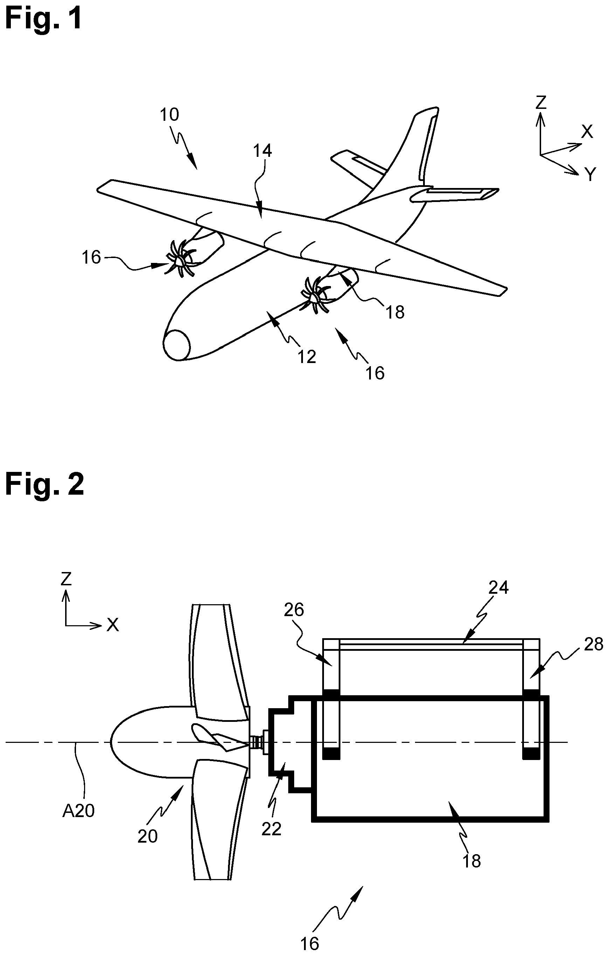

Selon un mode de réalisation visible sur la figure 1, un aéronef 10 comprend un fuselage 12, au moins une voilure 14 reliée au fuselage 12 ainsi que des ensembles propulseurs 16 reliés à la voilure 14 et disposés de part et d'autre du fuselage 12.

Comme illustré sur la figure 2, chaque ensemble propulseur 16 comprend un moteur 18, une hélice 20 présentant un axe de rotation A20, une boîte de vitesse 22 reliant le moteur 18 et l'hélice 20 ainsi qu'une structure primaire 24 reliant le moteur 18 et la boîte de vitesse 22 à la voilure 14.

Pour la suite de la description, une direction longitudinale X est parallèle à l'axe de rotation A20 de l'hélice 20. Un plan longitudinal contient l'axe de rotation A20. Un plan transversal est perpendiculaire à la direction longitudinale X. Une direction transversale horizontale Y est perpendiculaire à la direction longitudinale X et orientée horizontalement. Une direction transversale verticale Z est perpendiculaire à la direction longitudinale X et orientée verticalement. Les notions « avant » et « arrière » font référence au sens d'écoulement de l'air par rapport à l'aéronef en vol, l'air s'écoulant de l'avant vers l'arrière.

Dans le cas d'un moteur thermique ou d'une turbomachine, le moteur 18 comprend un corps structurel apte à transmettre des d'efforts, comme les efforts de poussée générés par l'hélice 20 par exemple.

Selon un mode de réalisation, la structure primaire 24 comprend un arçon avant 26 relié par plusieurs interfaces positionnées dans un premier plan transversal à une zone avant du moteur 18 ainsi qu'un arçon arrière 28 relié par plusieurs interfaces positionnées dans un deuxième plan transversal à une zone arrière du moteur 18.

Les arçons avant et arrière 26, 28 ainsi que les premier et deuxième plans transversaux sont les plus espacés possible pour assurer une reprise optimale des efforts de poussée de l'hélice 20 orientés selon la direction longitudinale X, du couple longitudinal Mx de l'hélice 20 ainsi que des efforts orientés selon les directions transversales horizontale et verticale Y et Z.

Le document FR2916736 décrit un mode de réalisation sensiblement similaire.

Ce mode de réalisation adapté pour les moteurs thermiques ou les turbomachines ne l'est pas pour les moteurs électriques qui n'ont pas de corps apte à transmettre des d'efforts, comme les efforts de poussée générés par l'hélice par exemple.

Selon d'autres modes de réalisation décrits dans les documents EP3757012 et EP1571081, une attache moteur comprend une attache moteur avant, une attache moteur arrière et un couple de bielles de poussée assurant la reprise des efforts de poussée. Ces bielles de poussée comprennent des extrémités supérieures qui convergent vers un point d'ancrage au niveau du mât ainsi que des extrémités inférieures positionnées de part et d'autre du turboréacteur et espacées de l'axe de rotation du turboréacteur. L'attache moteur avant comprend un prolongement positionné à l'avant du mât présentant une extrémité reliée au turboréacteur et écartée de l'axe de rotation du turboréacteur ainsi qu'une biellette reliant le mât et le carter de soufflante du turboréacteur, écartée de l'axe de rotation du turboréacteur.

Ces modes de réalisation appliqués à un turboréacteur sont difficilement applicables à un ensemble propulseur à hélice et moteur électrique.

La présente invention vise à remédier à tout ou partie des inconvénients de l'art antérieur. A cet effet, l'invention a pour objet un ensemble propulseur comprenant au moins un moteur électrique, une hélice présentant un axe de rotation, au moins un élément intermédiaire intercalé entre le moteur et l'hélice et configuré pour transmettre au moins des efforts de poussée générés par l'hélice ainsi qu'une structure primaire supportant l'ensemble propulseur.

Selon l'invention, l'ensemble propulseur comprend au moins une interface comportant un premier chemin d'effort, configuré pour transmettre essentiellement des efforts perpendiculaires à l'axe de rotation de l'hélice, reliant l'élément intermédiaire ou un des éléments intermédiaires à un support relié de manière rigide ou intégré à la structure primaire ainsi qu'un deuxième chemin d'effort, configuré pour transmettre essentiellement des efforts parallèles à l'axe de rotation de l'hélice, reliant l'élément intermédiaire ou un des éléments intermédiaires à un support relié de manière rigide ou intégré à la structure primaire, le deuxième chemin d'effort comprenant au moins deux bielles qui convergent sur l'axe de rotation de l'hélice.

L'interface n'étant pas reliée au moteur, la structure primaire est adaptée à un ensemble propulseur à moteur électrique. De plus, le fait de prévoir deux chemins d'effort permet d'optimiser chacun d'eux aux efforts qu'il transmet.

Selon une autre caractéristique, les bielles qui convergent sur l'axe de rotation de l'hélice forment chacune avec l'axe de rotation de l'hélice un angle compris entre 20 et 70°.

Selon une autre caractéristique, les bielles sont positionnées de manière symétrique par rapport à un plan vertical passant par l'axe de rotation de l'hélice.

Selon une autre caractéristique, le premier chemin comprend plusieurs attaches comportant chacune une liaison pivotante présentant un axe de pivotement orienté parallèlement à l'axe de rotation de l'hélice.

Selon une autre caractéristique, chaque attache comprend :
- une chape solidaire d'un premier élément parmi le support et l'élément intermédiaire,
- une tige cylindrique supportée par la chape et orientée parallèlement à l'axe de rotation de l'hélice,
- un corps solidaire d'un deuxième élément parmi le support et l'élément intermédiaire, différent du premier élément, comportant un logement cylindrique qui présente un diamètre supérieur à celui de la tige cylindrique et un axe parallèle à l'axe de rotation de l'hélice,
- un manchon en matériau élastique intercalé entre le logement du corps et la tige cylindrique supportée par la chape.

Selon une autre caractéristique, les attaches sont positionnées de manière symétrique par rapport à un plan vertical passant par l'axe de rotation de l'hélice.

Selon une autre caractéristique, chaque attache est positionnée dans un même plan longitudinal qu'une bielle.

Selon une autre caractéristique, l'interface comprend un premier support positionné dans un premier plan transversal, plusieurs attaches reliant le premier support ainsi que l'élément intermédiaire et positionnées approximativement dans le premier plan transversal ou proche de ce dernier, un deuxième support positionné dans un deuxième plan transversal décalé vers l'arrière par rapport au premier plan transversal, une extension solidaire de l'élément intermédiaire s'étendant selon une direction approximativement parallèle à l'axe de rotation de l'hélice, vers l'arrière par rapport à l'élément intermédiaire, l'extension étant reliée au deuxième support par une liaison.

Selon une autre caractéristique, la liaison reliant le deuxième support ainsi que l'extension comporte un doigt solidaire de l'extension et orienté selon une direction parallèle à l'axe de rotation de l'hélice ainsi qu'un logement solidaire du deuxième support et configuré pour recevoir le doigt, le logement et le doigt ayant approximativement le même diamètre.

Selon une autre caractéristique, l'interface comprend un support, au moins trois attaches souples reliant le support et l'élément intermédiaire, positionnées dans un premier plan transversal, ainsi qu'au moins trois bielles présentant une première extrémité reliée au support par une première liaison et une deuxième extrémité reliée à l'élément intermédiaire par une deuxième liaison positionnée dans un deuxième plan transversal, espacé du premier plan transversal et décalé vers l'avant par rapport à ce premier plan transversal.

Selon une autre caractéristique, l'interface comprend un premier support positionné dans un premier plan transversal, plusieurs attaches reliant le premier support ainsi que l'élément intermédiaire et positionnées approximativement dans le premier plan transversal ou proche de ce dernier, un deuxième support positionné dans un deuxième plan transversal, ainsi que plusieurs bielles présentant chacune une première extrémité reliée au deuxième support par une première liaison et une deuxième extrémité reliée à l'élément intermédiaire par une deuxième liaison positionnée dans un troisième plan transversal espacé du deuxième plan transversal et décalé vers l'avant par rapport à ce deuxième plan transversal.

Selon une autre caractéristique, chaque première ou deuxième liaison est une liaison pivotante présentant un axe de pivotement positionné dans un plan transversal perpendiculaire à l'axe de rotation de l'hélice, les axes de pivotement des première et deuxième liaisons de chaque bielle étant parallèles entre eux.

Selon un autre mode de réalisation, le premier chemin d'effort comprend une extension solidaire de l'élément intermédiaire s'étendant selon une direction approximativement parallèle à l'axe de rotation de l'hélice, vers l'arrière par rapport à l'élément intermédiaire, ladite extension étant reliée par une liaison au support auquel sont reliées les bielles.

Selon une autre caractéristique, la liaison reliant le support et l'extension comporte un doigt solidaire de l'extension et orienté selon une direction parallèle à l'axe de rotation de l'hélice ainsi qu'un logement solidaire du support et configuré pour recevoir le doigt, le logement et le doigt ayant approximativement les mêmes diamètres.

L'invention a également pour objet un aéronef comprenant au moins un ensemble propulseur selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique en perspective d'un aéronef illustrant un mode de réalisation,
- La figure 2 est une représentation schématique latérale d'un ensemble propulseur illustrant un mode de réalisation de l'art antérieur,
- La figure 3 est une représentation schématique latérale d'un ensemble propulseur illustrant un premier mode de réalisation de l'invention,
- La figure 4 est une vue en perspective d'un ensemble propulseur illustrant le premier mode de réalisation de l'invention,
- La figure 5 est une vue en perspective d'une attache reliant une structure primaire et une boîte de vitesse illustrant le premier mode de réalisation de l'invention,
- La figure 6 est une coupe transversale de l'attache visible sur la figure 5,
- La figure 7 est une représentation schématique latérale d'un ensemble propulseur illustrant un deuxième mode de réalisation de l'invention,
- La figure 8 est une représentation schématique de face illustrant le deuxième mode de réalisation de l'invention,
- La figure 9 est une vue en perspective d'une structure primaire illustrant le deuxième mode de réalisation de réalisation,
- La figure 10 est une représentation schématique latérale d'un ensemble propulseur illustrant un troisième mode de réalisation de l'invention,
- La figure 11 est une vue en perspective d'une structure primaire illustrant le troisième mode de réalisation de l'invention,
- La figure 12 est une représentation schématique latérale d'un ensemble propulseur illustrant un quatrième mode de réalisation selon un exemple qui ne fait pas partie de l'invention,
- La figure 13 est une vue en perspective d'une structure primaire illustrant le quatrième mode de réalisation selon un exemple qui ne fait pas partie de l'invention,
- La figure 14 est une représentation schématique latérale d'un ensemble propulseur illustrant un cinquième mode de réalisation, et
- La figure 15 est une représentation schématique de face illustrant le cinquième mode de réalisation.

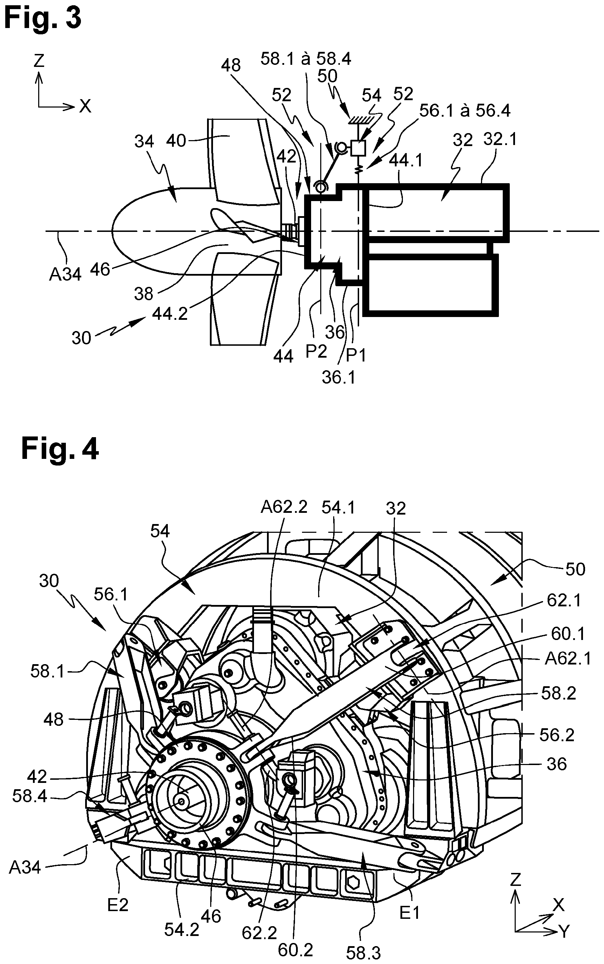

Selon des modes de réalisation visibles sur les figures 3, 4, 7, 8, 10 et 12, un ensemble propulseur 30 d'un aéronef comprend au moins un moteur 32, une hélice 34 présentant un axe de rotation A34 ainsi qu'une boîte de vitesse 36 reliant le moteur 32 et l'hélice 34.

Selon une configuration, l'hélice 34 comprend un moyeu 38 ainsi que plusieurs pales 40 supportées par le moyeu 38.

L'ensemble propulseur 30 comprend un premier arbre 42 reliant la boîte de vitesse 36 et le moyeu 38 de l'hélice 34.

Le moteur 32 est un moteur électrique. Selon une configuration, l'ensemble propulseur 30 comprend plusieurs moteurs électriques.

Chaque moteur 32 comprend au moins une carcasse 32.1 formant une enveloppe extérieure. Selon une configuration, cette carcasse 32.1 n'est pas apte à transmettre des d'efforts, comme des efforts de poussée générés par l'hélice 34 par exemple.

La boîte de vitesse 36 comprend un boîtier 44 formant une enveloppe extérieure. Selon une configuration, le boîtier 44 de la boîte de vitesse 36 est configuré pour transmettre des efforts, comme des efforts de poussée générés par l'hélice 34 par exemple. Bien entendu, l'invention n'est pas limitée à ce mode de réalisation. Ainsi, le boîtier 44 pourrait ne pas être apte à transmettre les d'efforts de poussée.

Le boîtier 44 comprend une face arrière 44.1, positionnée approximativement dans un plan transversal, sur laquelle est rapporté et fixé au moins un moteur 32, une face avant 44.2 traversée par le premier arbre 42 ainsi qu'au moins une face latérale reliant les faces arrière et avant 44.1, 44.2.

Selon une configuration, l'ensemble propulseur 30 comprend un système de guidage 46 du premier arbre 42 configuré pour transmettre des efforts, comme les efforts de poussée par exemple.

Quel que soit le mode de réalisation, l'ensemble propulseur 30 comprend au moins un élément intermédiaire 48 parmi la boîte de vitesse 36 et le système de guidage 46, intercalé entre le moteur 32 et l'hélice 34, configuré pour transmettre au moins des efforts de poussée générés par l'hélice 34.

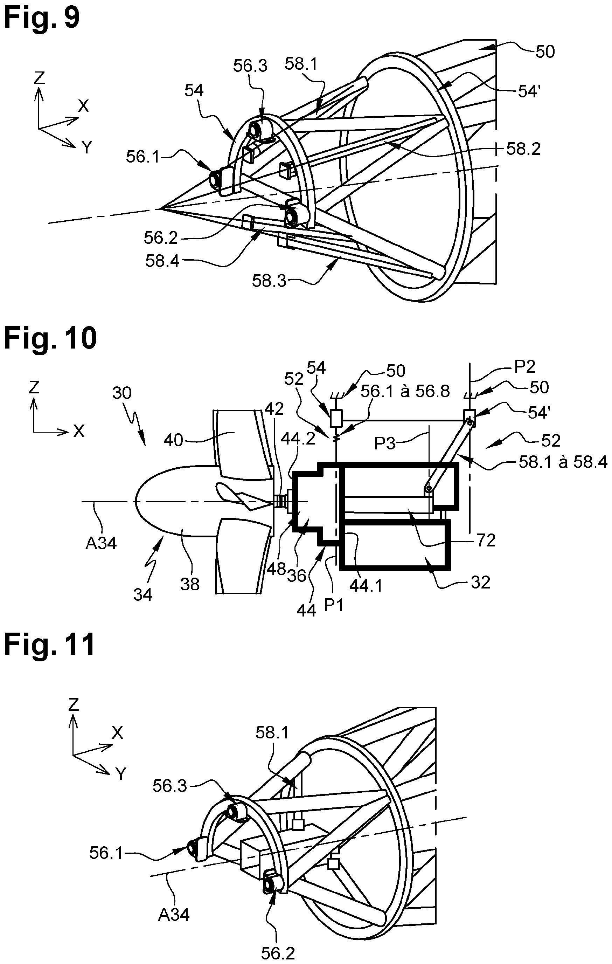

L'ensemble propulseur 30 comprend au moins une structure, appelée par la suite structure primaire 50, reliant l'ensemble propulseur 30 à la voilure de l'aéronef ainsi qu'une structure secondaire formant une enveloppe aérodynamique enveloppant l'ensemble propulseur 30. Selon les modes de réalisation, la structure primaire 50 peut comprendre une structure en caisson, une structure en treillis, comme illustré sur les figures 9,11 et 13, ou toute autre structure. Quel que soit le mode de réalisation, la structure primaire 50 est configurée pour transmettre des efforts entre l'ensemble propulseur 30 et la voilure de l'aéronef.

La structure primaire 50 comprend au moins une interface 52 la reliant à au moins un élément intermédiaire 48 ainsi qu'au moins une attache voilure la reliant à la voilure de l'aéronef.

Selon un premier mode de réalisation visible sur les figures 3 à 6, l'interface 52 comprend un support 54 relié de manière rigide ou intégré à la structure primaire 50, au moins trois attaches souples 56.1 à 56.3 reliant le support 54 et la boîte de vitesse 36, plus particulièrement son boîtier 44, positionnées dans un premier plan transversal P1, ainsi qu'au moins trois bielles 58.1 à 58.3 orientées selon des directions qui convergent sur l'axe de rotation A34 de l'hélice 34. Chaque bielle 58.1 à 58.3 présente une première extrémité 60.1 reliée au support 54 par une première liaison 62.1 et une deuxième extrémité 60.2 reliée à la boîte de vitesse 36, plus particulièrement à son boîtier 44, par une deuxième liaison 62.2 positionnée dans un deuxième plan transversal P2, espacé du premier plan transversal P1 et décalé vers l'avant par rapport à ce premier plan transversal P1. Selon une configuration, l'interface 52 comprend quatre attaches souples 56.1 à 56.4 et quatre bielles 58.1 à 58.4.

Les attaches souples 56.1 à 56.4 sont positionnées de manière symétrique par rapport à un plan longitudinal vertical. Selon une configuration, les attaches souples 56.1 à 56.4 sont régulièrement réparties autour de l'axe de rotation A34 de l'hélice 34. Les bielles 58.1 à 58.4 sont positionnées de manière symétrique par rapport à un plan longitudinal vertical. Selon une configuration, les bielles 58.1 à 58.4 sont régulièrement réparties autour de l'axe de rotation A24 de l'hélice 34.

Selon un agencement, chaque attache souple 56.1 à 56.4 est positionnée dans un même plan longitudinal qu'une bielle 58.1 à 58.4.

Selon une configuration, le premier plan transversal P1 est positionné à proximité de la face arrière 44.1 du boîtier 44 et le deuxième plan transversal P2 est positionné à proximité de la face avant 44.2 du boîtier 44. En variante, la deuxième extrémité 60.2 de chaque bielle 58.1 à 58.4 est reliée au système de guidage 46.

Chaque attache souple 56.1 à 56.4 comprend une chape 64 solidaire d'un premier élément parmi le support 54 et la boîte de vitesse 36, une tige cylindrique 66 supportée par la chape 64, solidaire de cette dernière et orientée parallèlement à la direction longitudinale X, ainsi qu'un corps 68 solidaire d'un deuxième élément parmi le support 54 et la boîte de vitesse 36, différent du premier élément, comportant un logement 68.1 cylindrique qui présente un diamètre supérieur à celui de la tige cylindrique 66 et un axe orienté parallèlement à la direction longitudinale X. La chape 64, la tige cylindrique 66 et le corps 68 sont en matériau rigide, comme en métal par exemple.

Chaque attache souple 56.1, 56.4 comprend également un manchon 70 en matériau élastique, comme en caoutchouc ou en élastomère par exemple, intercalé entre le logement 68.1 du corps 68 et la tige cylindrique 66 supportée par la chape 64. Ce manchon 70 présente un diamètre extérieur approximativement égal à celui du logement 68.1 du corps 68 et un diamètre intérieur approximativement égal à celui de la tige cylindrique 66. Selon un agencement, le manchon 70 est emmanché en force sur la tige cylindrique 66 et/ou dans le logement 68.1 du corps 68. En fonctionnement, le manchon 70 présente un axe orienté parallèlement à la direction longitudinale X.

Compte tenu de l'orientation du manchon 70, il assure un transfert des efforts selon les directions transversales horizontale et verticale Y et Z. En raison de sa capacité à se déformer de manière élastique, le manchon 70 permet de filtrer les vibrations et de limiter leur propagation entre le boîtier de vitesse 36 et la structure primaire 50.

Selon un agencement, chaque bielle 58.1 à 58.4 forme avec l'axe de rotation A34 de l'hélice 34 un angle compris entre 20 et 70°. Cette plage angulaire n'est pas limitative.

Selon une première variante, chaque première liaison 62.1 est une liaison pivotante présentant un axe de pivotement A62.1 positionné dans un plan transversal. En parallèle, chaque deuxième liaison 62.2 est une liaison pivotante présentant un axe de pivotement A62.2 positionné dans un plan transversal, les axes de pivotement A62.1, A62.2 des première et deuxième liaisons d'une même bielle 58.1 à 58.4 étant parallèles entre eux.

Selon une autre variante, chacune des première et deuxième liaisons 62.1, 62.2 est une liaison rotule.

Selon une configuration, le support 54 entoure la boîte de vitesse 36 et comprend une première partie 54.1 en arc de cercle ainsi qu'une deuxième partie 54.2 rectiligne reliant les extrémités E1, E2 de la première partie 54.1.

Bien entendu, l'invention n'est pas limitée à cette configuration pour le support 54.

Selon ce premier mode de réalisation, les bielles 58.1 à 58.4 assurent la reprise des efforts de poussée générés par l'hélice 34 orientés parallèlement à la direction longitudinale X ainsi que des moments orientés selon les directions transversales horizontale et verticale Y et Z. En complément, les attaches souples 56.1 à 56.4 assurent la reprise du couple généré par l'hélice 34 ainsi que des efforts orientés selon les directions transversales horizontale et verticale Y et Z.

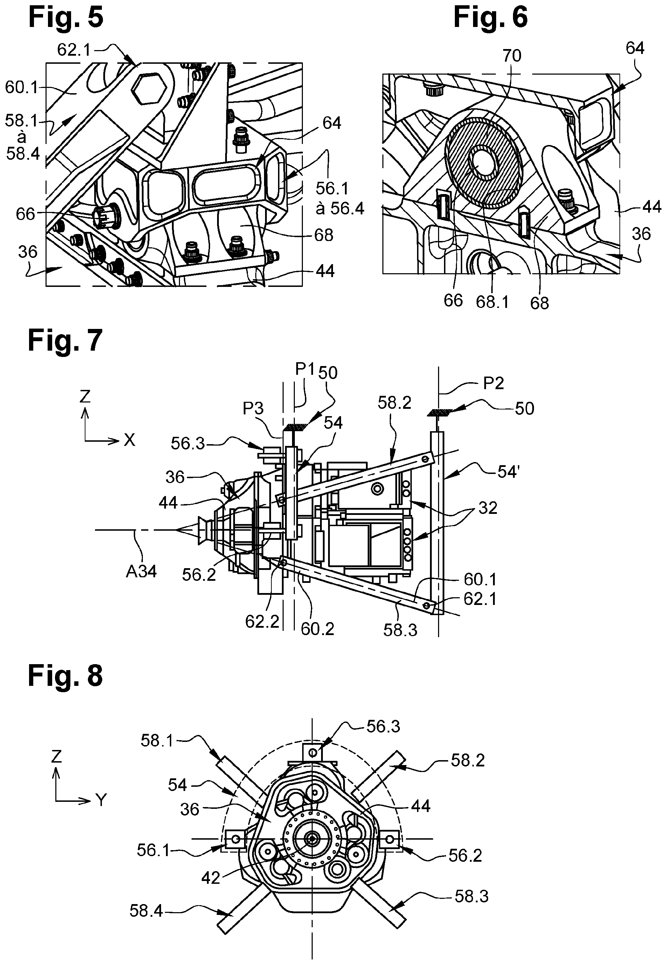

Selon un deuxième mode de réalisation visible sur les figures 7 à 9, l'interface 52 comprend un premier support 54, positionné dans un premier plan transversal P1, relié de manière rigide ou intégré à la structure primaire 50, plusieurs attaches 56.1 à 56.3 reliant le premier support 54 et la boîte de vitesse 36, plus particulièrement son boîtier 44, positionnées approximativement dans le premier plan transversal P1 ou proche de ce dernier, un deuxième support 54', positionné dans un deuxième plan transversal P2, relié de manière rigide ou intégré à la structure primaire 50, ainsi que plusieurs bielles 58.1 à 58.4 orientées selon des directions qui convergent sur l'axe de rotation A34 de l'hélice 34. Chaque bielle 58.1 à 58.4 présente une première extrémité 60.1 reliée au deuxième support 54 par une première liaison 62.1 et une deuxième extrémité 60.2 reliée à la boîte de vitesse 36, plus particulièrement à son boîtier 44, par une deuxième liaison 62.2 positionnée dans un troisième plan transversal P3 espacé du deuxième plan transversal P2 selon la direction longitudinale X, décalé vers l'avant par rapport à ce deuxième plan transversal P2. Le deuxième support 54' est décalé vers l'arrière par rapport au premier support 54.

Selon une configuration, l'interface 52 comprend trois attaches 56.1 à 56.3, des première et deuxième attaches 56.1 et 56.2 positionnées dans le plan longitudinal horizontal de part et d'autre de l'axe de rotation A34 de l'hélice 34 ainsi qu'une troisième attache 56.3 positionnée dans le plan longitudinal vertical. En complément, l'interface 52 comprend quatre bielles 58.1 à 58.4 positionnées autour de l'axe de rotation A34 de l'hélice 34 de manière symétrique par rapport au plan longitudinal vertical, à 45°, 135°, 225° et 315°.

Comme pour le premier mode de réalisation, chaque bielle 58.1 à 58.4 forme avec l'axe de rotation A34 de l'hélice 34 un angle compris entre 20 et 70°.

Selon une première variante, les attaches 56.1 à 56.3 sont des attaches souples comme illustré dans le premier mode de réalisation. Selon une deuxième variante, les attaches 56.1 à 56.3 ne sont pas souples et ne comprennent pas de manchon souple. Selon une configuration, chaque attache 56.1 à 56.3 comprend une liaison pivotante présentant un axe de pivotement orienté parallèlement à la direction longitudinale X.

Comme pour le premier mode de réalisation, pour chaque bielle 58.1 à 58.4, la première liaison 62.1 est une liaison pivotante présentant un axe de pivotement A62.1 positionné dans un plan transversal. En parallèle, chaque deuxième liaison 62.2 est une liaison pivotante présentant un axe de pivotement A62.2 positionné dans un plan transversal, les axes de pivotement A62.1, A62.2 des première et deuxième liaisons d'une même bielle 58.1 à 58.4 étant parallèles entre eux.

Selon une autre configuration, chacune des première et deuxième liaisons 62.1, 62.2 est une liaison rotule.

Les premier et deuxième supports 54, 54' présentent chacun une forme d'anneau ou d'arc de cercle.

Selon un troisième mode de réalisation visible sur les figures 10 et 11, l'interface 52 comprend une extension 72 solidaire de la boîte de vitesse 36, plus particulièrement de son boîtier 44, en saillie par rapport à la face arrière 44.1 du boîtier 44, qui s'étend selon une direction approximativement parallèle à la direction longitudinale X, vers l'arrière par rapport à la boîte de vitesse 36.

Selon ce troisième mode de réalisation, chaque deuxième extrémité 60.2 des bielles 58.1 à 58.4 est reliée par une deuxième liaison 62.2 à l'extension 72, lesdites deuxièmes liaisons 62.2 étant positionnées dans un troisième plan transversal P3, espacé du deuxième plan transversal P2 du deuxième support 54'.

Selon un mode de réalisation, l'extension 72 comprend un tube creux.

Comme pour les premier et deuxième modes de réalisation, chaque bielle 58.1 à 58.4 forme avec l'axe de rotation A34 de l'hélice 34 un angle compris entre 20 et 70°.

Selon ces deuxième et troisième modes de réalisation, les bielles 58.1 à 58.4 assurent la reprise des efforts de poussée orientés parallèlement à la direction longitudinale X ainsi que des moments orientés selon les directions transversales horizontale et verticale Y et Z. En complément, les attaches 56.1 à 56.4 assurent la reprise du couple généré par l'hélice ainsi que des efforts orientés selon les directions transversales horizontale et verticale Y et Z.

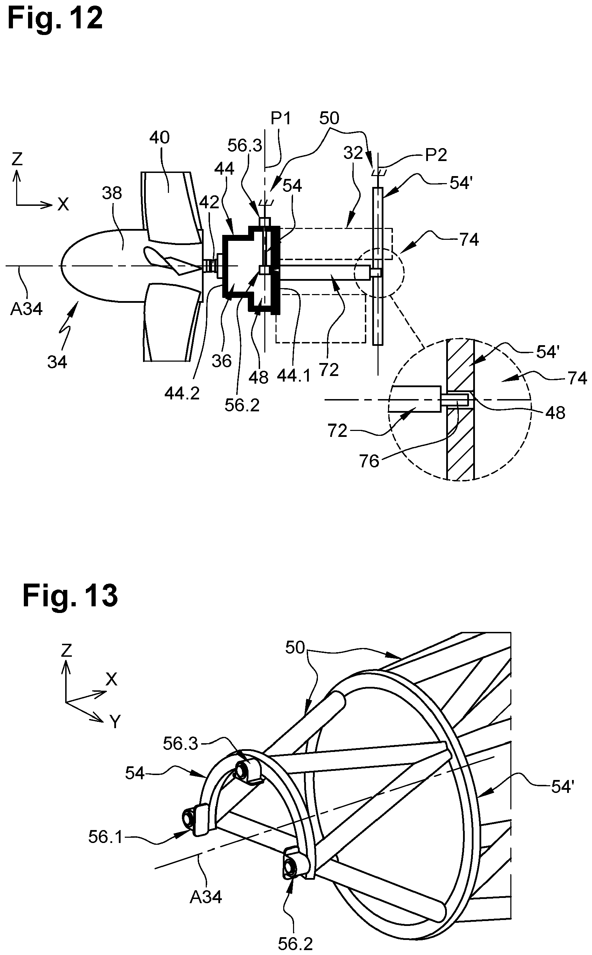

Selon un quatrième mode de réalisation selon un exemple qui ne fait pas partie de l'invention et qui est visible sur les figures 12 et 13, l'interface 52 comprend un premier support 54, positionné dans un premier plan transversal P1, plusieurs attaches 56.1 à 56.3 reliant le premier support 54 et la boîte de vitesse 36, plus particulièrement son boîtier 44, positionnées approximativement dans le premier plan transversal P1 ou proche de ce dernier, un deuxième support 54', positionné dans un deuxième plan transversal P2 décalé vers l'arrière par rapport au premier plan transversal P1, une extension 72 solidaire de la boîte de vitesse 36, plus particulièrement de son boîtier 44, en saillie par rapport à la face arrière 44.1 du boîtier 44, qui s'étend selon une direction approximativement parallèle à la direction longitudinale X, vers l'arrière par rapport à la boîte de vitesse 36 ainsi qu'au moins une liaison 74 reliant l'extension 72 et le deuxième support 54'.

Selon une configuration visible sur la figure 13, le premier support 54 est un demi-anneau positionné dans le premier plan transversal P1 et le deuxième support 54' est un anneau ou un disque positionné dans le deuxième plan P2.

Comme pour le troisième mode de réalisation, l'extension 72 est un tube creux.

Selon un agencement, l'interface 52 comprend trois attaches 56.1 à 56.3, des première et deuxième attaches 56.1 et 56.2 positionnées dans le plan longitudinal horizontal de part et d'autre de l'axe de rotation A34 de l'hélice 34 ainsi qu'une troisième attache 56.3 positionnée dans le plan longitudinal vertical.

Selon une première variante, les attaches 56.1 à 56.3 sont des attaches souples comme illustré dans le premier mode de réalisation. Selon une deuxième variante, les attaches 56.1 à 56.3 ne sont pas souples et sont configurées pour assurer la reprise des efforts de poussée parallèles à la direction longitudinale X, le couple de l'hélice 34 ainsi que les efforts inertiels orientés selon les directions transversales horizontale et verticale Y et Z. A titre d'exemple, les attaches 56.1 à 56.3 peuvent être des liaisons rotules ou des liaisons pivots non glissants.

La (ou les) liaison(s) 74 reliant l'extension 72 et le deuxième support 54' assure(nt) la reprise des efforts orientés dans un plan transversal. Selon une première configuration, la liaison 74 comprend deux renforts présentant chacun une première extrémité reliée au deuxième support 54' et une deuxième extrémité reliée à l'extension 72. Ces renforts sont positionnés dans un plan transversal, un premier renfort formant un angle de l'ordre de 45° avec la direction transversale et verticale Z, un deuxième renfort formant un angle de -45° avec la direction transversale et verticale Z.

Selon une deuxième configuration visible sur la figure 12, la liaison 74 comprend un doigt 76, solidaire de l'extension 72 et la prolongeant, orienté selon la direction longitudinale X ainsi qu'un logement 78 solidaire du deuxième support 54' et configuré pour recevoir le doigt 76, le logement 78 et le doigt 76 ayant approximativement le même diamètre.

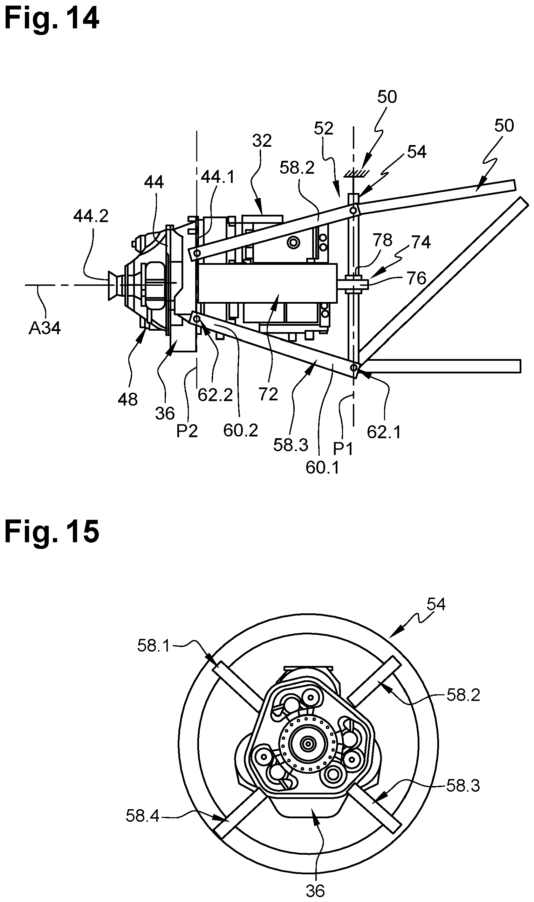

Selon un cinquième mode de réalisation visible sur les figures 14 et 15, l'interface 52 comprend un support 54, positionné dans un premier plan transversal P1, relié de manière rigide ou intégré à la structure primaire 50, ainsi que plusieurs bielles 58.1 à 58.4 orientées selon des directions qui convergent sur l'axe de rotation A34 de l'hélice 34. Chaque bielle 58.1 à 58.4 présente une première extrémité 60.1 reliée au support 54 par une première liaison 62.1 et une deuxième extrémité 60.2 reliée à la boîte de vitesse 36, plus particulièrement à son boîtier 44, par une deuxième liaison 62.2 positionnée dans un deuxième plan transversal P2 espacé du premier plan transversal P1 selon la direction longitudinale X, décalé vers l'avant par rapport à ce premier plan transversal P1. A titre d'exemple, les première et deuxième liaisons 62.1, 62.1 sont des liaisons rotules.

Selon une configuration, l'interface 52 comprend quatre bielles 58.1 à 58.4 positionnées autour de l'axe de rotation A34 de l'hélice 34 de manière symétrique par rapport au plan longitudinal vertical à 45°, 135°, 225° et 315°, les valeurs des angles étant données à titre d'exemple et pouvant être choisies dans des intervalles de plus ou moins 15° autour desdites valeurs.

Comme pour le premier mode de réalisation, chaque bielle 58.1 à 58.4 forme avec l'axe de rotation A34 de l'hélice 34 un angle compris entre 20 et 70°.

Selon ce cinquième mode de réalisation, l'interface 52 comprend une extension 72 solidaire de la boîte de vitesse 36, plus particulièrement de son boîtier 44, en saillie par rapport à la face arrière 44.1 du boîtier 44, qui s'étend selon une direction approximativement parallèle à la direction longitudinale X, vers l'arrière par rapport à la boîte de vitesse 36 ainsi qu'au moins une liaison 74 reliant l'extension 72 et le support 54.

Selon une configuration, la liaison 74 comprend un doigt 76, solidaire de l'extension 72 et la prolongeant, et orienté selon la direction longitudinale X ainsi qu'un logement 78 solidaire du support 54 et configuré pour recevoir le doigt 76, le logement 78 et le doigt 76 ayant approximativement les mêmes diamètres de manière à obtenir une liaison pivot glissant. Selon ce cinquième mode de réalisation, l'extension 72 et la liaison 74 relient la boîte de vitesse 36 ainsi que le support 54 et forment un premier chemin d'effort configuré pour transmettre essentiellement des efforts orientés parallèlement à un plan transversal. En complément, les bielles 58.1 à 58.4 relient la boîte de vitesse 36 ainsi que le support 54 et forment un deuxième chemin d'effort configuré pour transmettre des efforts orientés parallèlement à une direction longitudinale X.

Bien entendu, l'invention n'est pas limitée aux modes de réalisation précédemment décrits. Quel que soit le mode de réalisation, l'interface 52 comprend un premier chemin d'effort, configuré pour transmettre essentiellement des efforts orientés parallèlement à un plan transversal, reliant un élément intermédiaire 48 à un support 54 ainsi qu'un deuxième chemin d'effort, configuré pour transmettre des efforts orientés parallèlement à une direction longitudinale X, reliant un élément intermédiaire 48 à un support 54.

Selon l'invention, les chemins d'effort entre l'hélice 34 et la structure primaire 50 ne transitent pas par les moteurs 32. De plus, le fait de prévoir deux chemins d'effort permet d'optimiser chacun d'eux aux efforts qu'ils transmettent.

Selon des modes de réalisation visibles sur les figures 3 à 11, 14 et 15, le deuxième chemin d'effort comprend au moins deux bielles 58.1, 58.2 qui convergent sur l'axe de rotation A34 de l'hélice 34. Ces bielles forment chacune avec l'axe de rotation A34 de l'hélice 34 un angle compris entre 20 et 70°. Cet agencement permet d'optimiser la reprise des efforts de poussée générés par l'hélice 34.

Selon une autre particularité, les bielles sont positionnées de manière symétrique par rapport à un plan vertical passant par l'axe de rotation A34 de l'hélice 34. Selon un agencement, le deuxième chemin d'effort comprend au moins trois bielles, de préférence quatre bielles, reliées par des points d'ancrage à un cadre 54' entourant le moteur, les points d'ancrage étant répartis sur la circonférence du cadre 54. Cet agencement contribue à optimiser la reprise des efforts de poussée.

Selon des modes de réalisation, le premier chemin comprend plusieurs attaches 56.1, 56.2 comportant chacune une liaison pivotante qui présente un axe de pivotement orienté parallèlement à la direction longitudinale X. Cette configuration permet d'optimiser la reprise des efforts orientés selon des directions comprenant une composante parallèle à la direction transversale horizontale Y et/ou une composante parallèle à la direction transversale verticale Z.

## Revendications

1. Ensemble propulseur comprenant au moins un moteur (32) électrique, une hélice (34) présentant un axe de rotation (A34), au moins un élément intermédiaire (48) intercalé entre le moteur (32) et l'hélice (34) et configuré pour transmettre au moins des efforts de poussée générés par l'hélice (34) ainsi qu'une structure primaire (50) supportant l'ensemble propulseur, **caractérisé en ce que** l'ensemble propulseur comprend au moins une interface (52) comportant un premier chemin d'effort, configuré pour transmettre essentiellement des efforts perpendiculaires à l'axe de rotation (A34) de l'hélice (34), reliant l'élément intermédiaire (48) ou un des éléments intermédiaires (48) à un support (54) relié de manière rigide ou intégré à la structure primaire (50) ainsi qu'un deuxième chemin d'effort, configuré pour transmettre essentiellement des efforts parallèles à l'axe de rotation (A34) de l'hélice (34), reliant l'élément intermédiaire (48) ou un des éléments intermédiaires (48) à un support (54) relié de manière rigide ou intégré à la structure primaire (50) et **en ce que** le deuxième chemin d'effort comprend au moins deux bielles (58.1, 58.2) qui convergent sur l'axe de rotation (A34) de l'hélice (34).

2. Ensemble propulseur selon la revendication 1, **caractérisé en ce que** les bielles (58.1, 58.2) qui convergent sur l'axe de rotation (A34) de l'hélice (34) forment chacune avec l'axe de rotation (A34) de l'hélice (34) un angle compris entre 20 et 70°.

3. Ensemble propulseur selon la revendication 2, **caractérisé en ce que** les bielles (58.1, 58.2) sont positionnées de manière symétrique par rapport à un plan vertical passant par l'axe de rotation (A34) de l'hélice (34).

4. Ensemble propulseur selon l'une des revendications précédentes, **caractérisé en ce que** le premier chemin comprend plusieurs attaches (56.1, 56.2) comportant chacune une liaison pivotante présentant un axe de pivotement orienté parallèlement à l'axe de rotation (A34) de l'hélice (34).

5. Ensemble propulseur selon la revendication précédente, **caractérisé en ce que** chaque attache (56.1, 56.2) comprend :
- une chape (64) solidaire d'un premier élément parmi le support (54) et l'élément intermédiaire (48),
- une tige cylindrique (66) supportée par la chape (64) et orientée parallèlement à l'axe de rotation (A34) de l'hélice (34),
- un corps (68) solidaire d'un deuxième élément parmi le support (54) et l'élément intermédiaire (48), différent du premier élément, comportant un logement (68.1) cylindrique qui présente un diamètre supérieur à celui de la tige cylindrique (66) et un axe parallèle à l'axe de rotation (A34) de l'hélice (34),
- un manchon (70) en matériau élastique intercalé entre le logement (68.1) du corps (68) et la tige cylindrique (66) supportée par la chape (64).

6. Ensemble propulseur selon revendication 4 ou 5, **caractérisé en ce que** les attaches (56.1, 56.2) sont positionnées de manière symétrique par rapport à un plan vertical passant par l'axe de rotation (A34) de l'hélice (34).

7. Ensemble propulseur selon la revendication précédente, **caractérisé en ce que** chaque attache (56.1, 56.2) est positionnée dans un même plan longitudinal qu'une bielle (58.1, 58.2).

8. Ensemble propulseur selon l'une des revendications 1 à 7, **caractérisé en ce que** l'interface (52) comprend un support (54), au moins trois attaches souples (56.1 à 56.3) reliant le support (54) et l'élément intermédiaire (48), positionnées dans un premier plan transversal (P1), ainsi qu'au moins trois bielles (58.1 à 58.3) présentant une première extrémité (60.1) reliée au support (54) par une première liaison (62.1) et une deuxième extrémité (60.2) reliée à l'élément intermédiaire (48) par une deuxième liaison (62.2) positionnée dans un deuxième plan transversal (P2), espacé du premier plan transversal (P1) et décalé vers l'avant par rapport à ce premier plan transversal (P1).

9. Ensemble propulseur selon l'une des revendications 1 à 7, **caractérisé en ce que** l'interface (52) comprend un premier support (54) positionné dans un premier plan transversal (P1), plusieurs attaches (56.1 à 56.3) reliant le premier support (54) et l'élément intermédiaire (48), positionnées approximativement dans le premier plan transversal (P1) ou proche de ce dernier, un deuxième support (54') positionné dans un deuxième plan transversal (P2), ainsi que plusieurs bielles (58.1 à 58.4) présentant chacune une première extrémité (60.1) reliée au deuxième support (54') par une première liaison (62.1) et une deuxième extrémité (60.2) reliée à l'élément intermédiaire (48) par une deuxième liaison (62.2) positionnée dans un troisième plan transversal (P3) espacé du deuxième plan transversal (P2) et décalé vers l'avant par rapport à ce deuxième plan transversal (P2).

10. Ensemble propulseur selon la revendication 8 ou 9, **caractérisé en ce que** chaque première ou deuxième liaison (62.1, 62.2) est une liaison pivotante présentant un axe de pivotement (A62.1, A62.2) positionné dans un plan transversal perpendiculaire à l'axe de rotation (A34) de l'hélice (34), les axes de pivotement (A62.1, A62.2) des première et deuxième liaisons de chaque bielle (58.1, 58.2) étant parallèles entre eux.

11. Ensemble propulseur selon l'une des revendications 1 à 3, **caractérisé en ce que** le premier chemin d'effort comprend une extension (72), solidaire de l'élément intermédiaire (48), s'étendant selon une direction approximativement parallèle à l'axe de rotation (A34) de l'hélice (34) vers l'arrière par rapport à l'élément intermédiaire (48), ladite extension (72) étant reliée par une liaison (74) au support (54) auquel sont reliées les bielles (58.1, 58.2).

12. Ensemble propulseur selon la revendication précédente, **caractérisé en ce que** la liaison (74) reliant le support (54) et l'extension (72) comporte un doigt (76) solidaire de l'extension (72) et orienté selon une direction parallèle à l'axe de rotation (A34) de l'hélice (34) ainsi qu'un logement (78) solidaire du support (54) et configuré pour recevoir le doigt (76), le logement (78) et le doigt (76) ayant approximativement le même diamètre.

13. Aéronef comprenant au moins un ensemble propulseur selon l'une des revendications précédentes.

## Patentansprüche

1. Triebwerkseinheit mit wenigstens einem Elektromotor (32), einem Propeller (34) mit einer Drehachse (A34), wenigstens einem Zwischenelement (48), das zwischen dem Motor (32) und dem Propeller (34) eingefügt ist und so eingerichtet ist, dass es wenigstens die vom Propeller (34) erzeugten Schubkräfte überträgt, sowie einer Primärstruktur (50), die die Triebwerkseinheit hält, **dadurch gekennzeichnet, dass** die Triebwerkseinheit wenigstens eine Schnittstelle (52) mit einem ersten Kraftweg aufweist, der so eingerichtet ist, dass er im Wesentlichen Kräfte im rechten Winkel zur Drehachse (A34) des Propellers (34) überträgt und das Zwischenelement (48) oder eines der Zwischenelemente (48) mit einem Träger (54) verbindet, der starr mit der Primärstruktur (50) verbunden oder in diese integriert ist, sowie einen zweiten Kraftweg aufweist, der so eingerichtet ist, dass er im Wesentlichen Kräfte parallel zur Drehachse (A34) des Propellers (34) überträgt und das Zwischenelement (48) oder eines der Zwischenelemente (48) mit einem Träger (54) verbindet, der starr mit der Primärstruktur (50) verbunden oder in diese integriert ist, und dass der zweite Kraftweg wenigstens zwei Koppelstangen (58.1, 58.2) aufweist, die auf der Drehachse (A34) des Propellers (34) zusammenlaufen.

2. Triebwerkseinheit nach Anspruch 1, **dadurch gekennzeichnet, dass** die Koppelstangen (58.1, 58.2), die auf der Drehachse (A34) des Propellers (34) zusammenlaufen, jeweils mit der Drehachse (A34) des Propellers (34) einen Winkel zwischen 20 und 70° einschließen.

3. Triebwerkseinheit nach Anspruch 2, **dadurch gekennzeichnet, dass** die Koppelstangen (58.1, 58.2) symmetrisch zu einer vertikalen Ebene durch die Drehachse (A34) des Propellers (34) angeordnet sind.

4. Triebwerkseinheit nach einem der vorhergehenden Ansprüche, **dadurch gekennzeichnet, dass** der erste Weg mehrere Befestigungen (56.1, 56.2) umfasst, die jeweils eine Schwenkverbindung mit einer Schwenkachse aufweisen, die parallel zur Drehachse (A34) des Propellers (34) ausgerichtet ist.

5. Triebwerkseinheit nach dem vorhergehenden Anspruch, **dadurch gekennzeichnet, dass** jede Befestigung (56.1, 56.2) umfasst:
- einen Gabelkopf (64), der fest mit einem ersten Element aus Träger (54) und Zwischenelement (48) verbunden ist,
- eine zylindrische Stange (66), die von dem Gabelkopf (64) gehalten ist und parallel zur Drehachse (A34) des Propellers (34) ausgerichtet ist,
- einen Körper (68), der fest mit einem zweiten Element aus Träger (54) und Zwischenelement (48) verbunden ist, sich vom ersten Element unterscheidet und eine zylindrische Aufnahme (68.1) aufweist, die einen größeren Durchmesser als die zylindrische Stange (66) und eine Achse parallel zur Drehachse (A34) des Propellers (34) aufweist,
- eine Hülse (70) aus elastischem Material, die zwischen der Aufnahme (68.1) des Körpers (68) und der zylindrischen Stange (66), die von dem Gabelkopf (64) gehalten ist, eingefügt ist.

6. Triebwerkseinheit nach Anspruch 4 oder 5, **dadurch gekennzeichnet, dass** die Befestigungen (56.1, 56.2) symmetrisch zu einer vertikalen Ebene angeordnet sind, die durch die Drehachse (A34) des Propellers (34) verläuft.

7. Triebwerkseinheit nach dem vorhergehenden Anspruch, **dadurch gekennzeichnet, dass** jede Befestigung (56.1, 56.2) in der gleichen Längsebene wie eine Koppelstange (58.1, 58.2) angeordnet ist.

8. Triebwerkseinheit nach einem der Ansprüche 1 bis 7, **dadurch gekennzeichnet, dass** die Schnittstelle (52) einen Träger (54), wenigstens drei flexible Befestigungen (56.1 bis 56.3), die den Träger (54) und das Zwischenelement (48) verbinden und in einer ersten Querebene (P1) angeordnet sind, sowie wenigstens drei Koppelstangen (58.1 bis 58.3) aufweist, die ein erstes Ende (60.1), das mit dem Träger (54) über eine erste Verbindung (62.1) verbunden ist, und ein zweites Ende (60.2) aufweisen, das mit dem Zwischenelement (48) über eine zweite Verbindung (62.2) verbunden ist, die in einer zweiten Querebene (P2) angeordnet ist, die von der ersten Querebene (P1) beabstandet und die in Bezug auf diese erste Querebene (P1) nach vorne versetzt ist.

9. Triebwerkseinheit nach einem der Ansprüche 1 bis 7, **dadurch gekennzeichnet, dass** die Schnittstelle (52) einen ersten Träger (54), der in einer ersten Querebene (P1) angeordnet ist, mehrere Befestigungen (56.1 bis 56.3), die den ersten Träger (54) und das Zwischenelement (48) verbinden und ungefähr in der ersten Querebene (P1) oder in dessen Nähe angeordnet sind, einen zweiten Träger (54'), der in einer zweiten Querebene (P2) angeordnet ist, sowie mehrere Koppelstangen (58.1 bis 58.4) umfasst, die jeweils ein erstes Ende (60.1), das mit dem zweiten Träger (54') über eine erste Verbindung (62.1) verbunden ist, und ein zweites Ende (60.2) aufweisen, das mit dem Zwischenelement (48) über eine zweite Verbindung (62.2) verbunden ist, die in einer dritten Querebene (P3) angeordnet ist, die von der zweiten Querebene (P2) beabstandet und in Bezug auf diese zweite Querebene (P2) nach vorne versetzt ist.

10. Triebwerkseinheit nach Anspruch 8 oder 9, **dadurch gekennzeichnet, dass** jede erste oder zweite Verbindung (62.1, 62.2) eine Schwenkverbindung ist, die eine Schwenkachse (A62.1, A62.2) aufweist, die in einer Querebene im rechten Winkel zur Drehachse (A34) des Propellers (34) angeordnet ist, wobei die Schwenkachsen (A62.1, A62.2) der ersten und zweiten Verbindung jeder Koppelstange (58.1, 58.2) parallel zueinander sind.

11. Antriebseinheit nach einem der Ansprüche 1 bis 3, **dadurch gekennzeichnet, dass** der erste Kraftweg eine Verlängerung (72) aufweist, die fest mit dem Zwischenelement (48) verbunden ist und sich in einer Richtung erstreckt, die ungefähr parallel zur Drehachse (A34) des Propellers (34) nach hinten in Bezug auf das Zwischenelement (48) verläuft, wobei die Verlängerung (72) über eine Verbindung (74) mit dem Träger (54) verbunden ist, mit dem die Koppelstangen (58.1, 58.2) verbunden sind.

12. Triebwerkseinheit nach dem vorhergehenden Anspruch, **dadurch gekennzeichnet, dass** die Verbindung (74), die den Träger (54) und die Verlängerung (72) verbindet, einen Finger (76) aufweist, der fest mit der Verlängerung (72) verbunden ist und in einer Richtung parallel zur Drehachse (A34) des Propellers (34) ausgerichtet ist, sowie eine Aufnahme (78), die fest mit dem Träger (54) verbunden ist und so eingerichtet ist, dass sie den Finger (76) aufnimmt, wobei die Aufnahme (78) und der Finger (76) ungefähr den gleichen Durchmesser haben.

13. Luftfahrzeug mit wenigstens einer Triebwerkseinheit nach einem der vorhergehenden Ansprüche.

## Claims

1. Propulsion unit comprising at least one electric motor (32), a propeller (34) exhibiting an axis of rotation (A34), at least one intermediate element (48) interposed between the motor (32) and the propeller (34) and configured to transmit at least thrust loads generated by the propeller (34), and a primary structure (50) supporting the propulsion unit, wherein the propulsion unit comprises at least one interface (52) having a first load path, configured to transmit essentially loads that are perpendicular to the axis of rotation (A34) of the propeller (34), linking the intermediate element (48) or one of the intermediate elements (48) to a support (54) linked rigidly to or incorporated in the primary structure (50), and a second load path, configured to transmit essentially loads that are parallel to the axis of rotation (A34) of the propeller (34), linking the intermediate element (48) or one of the intermediate elements (48) to a support (54) linked rigidly to or incorporated in the primary structure (50).

2. Propulsion unit as claimed in claim 1, wherein the second load path comprises at least two connecting rods (58.1, 58.2) which converge on the axis of rotation (A34) of the propeller (34) and each of which forms an angle of between 20° and 70° with the axis of rotation (A34) of the propeller (34).

3. Propulsion unit as claimed in claim 2, wherein the connecting rods (58.1, 58.2) are positioned symmetrically with respect to a vertical plane passing through the axis of rotation (A34) of the propeller (34).

4. Propulsion unit as claimed in one of the preceding claims, wherein the first path comprises multiple attachments (56.1, 56.2) each having a pivoting connection exhibiting a pivot axis oriented parallel to the axis of rotation (A34) of the propeller (34).

5. Propulsion unit as claimed in the preceding claim, wherein each attachment (56.1, 56.2) comprises:
- a clevis (64) integral with a first element from among the support (54) and the intermediate element (48),
- a cylindrical rod (66) supported by the clevis (64) and oriented parallel to the axis of rotation (A34) of the propeller (34),
- a body (68) integral with a second element from among the support (54) and the intermediate element (48), different than the first element, having a cylindrical recess (68.1) which exhibits a diameter greater than that of the cylindrical rod (66) and an axis parallel to the axis of rotation (A34) of the propeller (34),
- a sleeve (70) made of elastic material interposed between the recess (68.1) in the body (68) and the cylindrical rod (66) supported by the clevis (64).

6. Propulsion unit as claimed in claim 4 or 5, wherein the attachments (56.1, 56.2) are positioned symmetrically with respect to a vertical plane passing through the axis of rotation (A34) of the propeller (34).

7. Propulsion unit as claimed in the preceding claim, wherein each attachment (56.1, 56.2) is positioned in the same longitudinal plane as a connecting rod (58.1, 58.2).

8. Propulsion unit as claimed in one of claims 1 to 7, wherein the interface (52) comprises a support (54), at least three flexible attachments (56.1 to 56.3) which link the support (54) and the intermediate element (48) and are positioned in a first transverse plane (P1), and also at least three connecting rods (58.1 to 58.3) having a first end (60.1) linked to the support (54) by a first connection (62.1) and a second end (60.2) linked to the intermediate element (48) by a second connection (62.2) positioned in a second transverse plane (P2), spaced apart from the first transverse plane (P1) and offset toward the front with respect to this first transverse plane (P1).

9. Propulsion unit as claimed in one of claims 1 to 7, wherein the interface (52) comprises a first support (54) positioned in a first transverse plane (P1), multiple attachments (56.1 to 56.3) which link the first support (54) and the intermediate element (48) and are positioned approximately in the first transverse plane (P1) or close to it, a second support (54') positioned in a second transverse plane (P2), and also multiple connecting rods (58.1 to 58.4) each having a first end (60.1) linked to the second support (54') by a first connection (62.1) and a second end (60.2) linked to the intermediate element (48) by a second connection (62.2) positioned in a third transverse plane (P3), spaced apart from the second transverse plane (P2) and offset toward the front with respect to this second transverse plane (P2).

10. Propulsion unit as claimed in claim 8 or 9, wherein each first or second connection (62.1, 62.2) is a pivoting connection exhibiting a pivot axis (A62.1, A62.2) positioned in a transverse plane that is perpendicular to the axis of rotation (A34) of the propeller (34), the pivot axes (A62.1, A62.2) of the first and second connections of each connecting rod (58.1, 58.2) being parallel to one another.

11. Propulsion unit as claimed in one of claims 1 to 3, wherein the first load path comprises an extension (72), integral with the intermediate element (48), extending in a direction approximately parallel to the axis of rotation (A34) of the propeller (34) toward the rear with respect to the intermediate element (48), said extension (72) being linked by a connection (74) to the support (54) to which the connecting rods (58.1, 58.2) are linked.

12. The propulsion unit as claimed in the preceding claim, wherein the connection (74) linking the support (54) and the extension (72) has a finger (76) integral with the extension (72) and oriented in a direction parallel to the axis of rotation (A34) of the propeller (34), and also a recess (78) integral with the support (54) and configured to receive the finger (76), the recess (78) and the finger (76) having approximately the same diameter.

13. An aircraft comprising at least one propulsion unit as claimed in one of the preceding claims.
